## Europäisches Patentamt

## European Patent Office

## Office européen des brevets

(11) Veröffentlichungsnummer: **0 089 514**
**B1**

(12) # EUROPÄISCHE PATENTSCHRIFT

(45) Veröffentlichungstag der Patentschrift:
04.11.87

(51) Int. Cl.⁴: **C 25 F 3/16,** C 25 F 3/22,
A 61 C 13/08, A 61 C 13/02

(21) Anmeldenummer: 83101854.4

(22) Anmeldetag: 25.02.83

(54) Verfahren und Vorrichtung zur elektrolytischen Glänzbehandlung von Legierungen.

(30) Priorität: 20.03.82 DE 3210315

(43) Veröffentlichungstag der Anmeldung:
28.09.83 Patentblatt 83/39

(45) Bekanntmachung des Hinweises auf die Patenterteilung:
04.11.87 Patentblatt 87/45

(84) Benannte Vertragsstaaten:
FR GB IT

(56) Entgegenhaltungen:
AT-B-300 491
DD-A-90 039
DE-A-2 755 792

(73) Patentinhaber: **Fried. Krupp Gesellschaft mit beschränkter Haftung, Altendorfer Strasse 103, D-4300 Essen 1 (DE)**

(72) Erfinder: **Friedrich, Ronald, Monterkampweg 43, D-4132 Kamp- Lintfort (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Anmeldung betrifft ein Verfahren zur elektrolytischen Glänzbehandlung von Co-Cr- oder Ti-Legierungen, wie sie insbesondere beim Behandeln von Zahnprothesen in einem galvanischen Bad angewendet wird, wobei die an der zu behandelnden Legierung anliegende Gleichspannung in bestimmten Zeitintervallen umgepolt wird.

Zur elektrolytischen Glänzbehandlung von Metallen und Legierungen wird an eine elektrolytische Zelle eine äußere Spannung gelegt, so daß nur das gewünschte Metall aus der Lösung ausgeschieden wird, nicht aber diejenigen Verunreinigungen, deren Ausscheidungspotentiale höher sind. Dabei hat sich in der Praxis herausgestellt, daß die optimale Glänzbehandlung bei gleichbleibender äußerer Spannung gewährleistet ist. Dazu stattet man die Geräte zum elektrolytischen Glänzen mit einer Badbewegung aus, um in jeder Phase des galvanischen Vorgangs frisches Elektrolyt an das Gut zu bringen und damit die Schlierenbildung zu vermeiden. Dennoch besitzen die behandelten Werkstoffe oftmals Überzüge aus Oxiden oder anderen Verunreinigungen.

In der DD-A-90 039 wird zur Erzeugung einer hochglänzenden Oberfläche, vorzugsweise auf Kupfer und Zink, durch Anwendung einer Polschaltung vorgeschlagen, das katodische Zeitintervall vorzugsweise 0,5 bis 10 s bei einer Polarisation von 0,5 bis 5 V und das anodische Zeitintervall 0,1 bis 5 s bei einer Polarisation von 1 bis 10 V zu wählen.

Die DE-A-27 55 792 schlägt ein Verfahren zum elektrolytischen Polieren von, wobei Stromimpulse zwischen einem Werkstück und einer benachbarten Werkzeugelektrode in Gegenwart eines Elektrolyten mit einer Impulsdauer von maximal 100 µs verwendet werden und das Zwischenimpulsintervall mehr als doppelt so lang wie die Einschaltzeit gewählt wird.

Es ist daher Aufgabe der Erfindung, ein Verfahren zur elektrolytischen Glänzbehandlung anzugeben, das zu einer gleichmäßig glanzenden Oberflache ohne Oxidablagerungen und Verunreinigungen führt.

Die Aufgabe wird dadurch gelöst, daß die zwischen Badbehälter und Werkstück, insbesondere Zahnprothese aus einer Cobalt-Chrom- oder Titan-Legierung, angelegte Gleichspannung in bestimmten Zeitintervallen von 5 bis 10 sec kurzzeitig umgepolt wird und die Dauer der Umpolung maximal 1 sec beträgt. Das Umpolen bewirkt ein Abstoßen der Oxidüberzüge und der normalerweise unvermeidbar auftretenden Ablagerungen auf dem Werkstück bzw. der Zahnprothese. Der umgepolte Zustand darf aber auch nur so kurz wie beschrieben aufrechterhalten werden, da ansonsten die eigentliche Glänzbehandlung verlängert würde bzw. rückgängig gemacht würde. Die genannten Zeitintervalle werden jeweils von Zeiträumen von maximal 1 sec abgelöst, in denen der entsprechend der Behandlungsintervalle, in denen die Glänzbehandlung stattfindet, zu der Dauer des Umpolungszustandes mit 20:1 zu wählen.

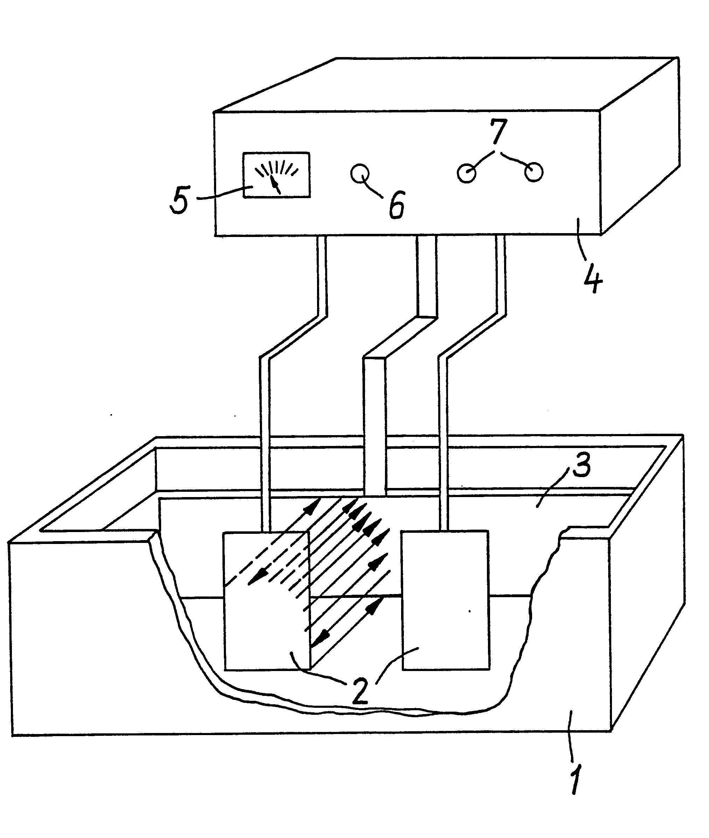

Ein Ausführungsbeispiel der erfindungsgemäßen Vorrichtung ist in der Zeichnung dargestellt und soll im folgenden mit seiner Funktionsweise beschrieben werden. Die in der Zeichnung dargestellte Glänzanlage besteht im wesentlichen aus einem Badbehälter 1 sowie Aufhängevorrichtungen 2, die gleichzeitig während der Glänzbehandlung als Anoden geschaltet sind, und einem Katodenblech 3. Die Aufhängevorrichtung 2 und das Katodenblech 3 tauchen vollständig in das galvanische Bad ein und sind jeweils mit einer Schalteinheit 4 verbunden, die eine regelbare Einstellung der Zeitkonstanten für die Dauer der Glänzbehandlung als auch die Dauer des umgepolten Zustandes ermöglicht. Die Schalteinheit 4 dient ferner dazu, die zur elektrolytischen Glänzbehandlung erforderliche Spannung über einen Regler 6 einzustellen und an der Spannungsanzeige 5 abzulesen. Regler 7 dient zur Einstellung der Zeitkonstante. Der Badbehälter 1 ist in nach dem Stand der Technik bekannter Weise mit Kühlschlangen und einer Badheizung ausgestattet, die von einem Thermostat gesteuert werden kann. Der Badbehälter ist zudem mit einer Badbewegung ausgestattet und kann bei Bedarf mit einer Haube abgedeckt werden.

Zur Durchführung der Glänzbehandlung werden die Werkstücke auf die Aufhängevorrichtungen 2 in das Bad gehängt und die zur elektrolytischen Glänzbehandlung nötige Spannung über den Regler 6 eingestellt. In einem weiteren Arbeitsschritt werden nun die Zeitkonstanten mittels der Regeleinrichtungen 7 vorgegeben. In einem speziellen Anwendungsbeispiel wurden Eisen-Chrom-Cobalt-Zahnprothesen elektrolytisch bearbeitet, bei denen die Dauer der Glänzbehandlung mit 6 sec eingestellt worden ist und die Dauer der umgepolten Spannung, d.h. die Aufhängevorrichtungen 2 sind negativ geladen, mit 0.38 sec.

Mit den vorgenannten Zeiten sind auch Titan-Legierungen hervorragend "geglänzt" worden.

Die in der Zeichnung dargestellten Pfeile sollen den je nach Polung unterschiedlichen Ladungstransport einer Sorte von Ladungen qualitativ darlegen.

## Patentansprüche

1. Verfahren zur elektrolytischen Glänzbehandlung von Co-Cr- oder Ti-Legierungen, insbesondere Zahnprothesen, bei denen in einem galvanischen Bad die an der zu behandelnden Legierung anliegende Gleichspannung in bestimmten Zeitintervallen umgepolt wird, wobei die Zeitintervalle 5 bis 10 sec und die Dauer der Umpolung maximal 1 sec lang sind.

2. Verfahren nach Anspruch 1, dadurch gekennzeichnet, daß das Verhältnis der Zeitintervalle zu der Dauer der Umpolung 20:1 beträgt.

## Claims

1. A process for the electrolytic polish-finishing treateement of CoCr or Ti alloys, more particularly dental prostheses, wherein the polarity of the direct voltage applied to the alloy to be treated in a galvenic bath is reversed at predetermined intervals of time, such intervals being 5 to 10 seconds and the reversal of polarity lasting for 1 second at most.

2. A process according to claim 1, characterised in that the ratio between such intervals and the duration of polarity reversal is 20:1.

## Revendications

1. Procédé pour le polissage électrolytique d'alliages de Co- Cr- ou de i, notamment de prothèses dentaires, dans lequel la tension continue appliquée dans un bain galvanique à l'alliage à traiter change de polarité à des intervalles de temps déterminés, ces intervalles de temps étant de 5 à 10 secondes et la durée de l'inversion de polarité étant au maximum de 1 seconde.

2. Procédé selon la revendication 1, caractérisé en ce que le rapport entre les intervalles de temps et la durée de l'inversion de polarité est de 20 : 1.